(19) **Europäisches Patentamt / European Patent Office / Office européen des brevets**

(11) **EP 4 664 228 B1**

(12) # EUROPEAN PATENT SPECIFICATION

(45) Date of publication and mention
of the grant of the patent:
**25.03.2026 Bulletin 2026/13**

(21) Application number: **24181117.3**

(22) Date of filing: **10.06.2024**

(51) International Patent Classification (IPC):
**G05D 1/644** (2024.01)    **G05D 1/246** (2024.01)
**G06Q 10/047** (2023.01)    **G05D 1/698** (2024.01)
**B65G 1/04** (2006.01)    **B65G 43/00** (2006.01)
**G06N 3/006** (2023.01)    **G06N 3/044** (2023.01)
**G06N 3/045** (2023.01)    **G06N 3/08** (2023.01)
**G05D 101/15** (2024.01)    **G05D 105/28** (2024.01)
**G05D 107/70** (2024.01)    **G05D 109/10** (2024.01)

(52) Cooperative Patent Classification (CPC):
**G05D 1/2464; G05D 1/644; G05D 1/6987;**
**G06N 3/006; G06N 3/044; G06N 3/045; G06N 3/08;**
**G06Q 10/047; B65G 1/0464; G05D 2101/15;**
G05D 2105/28; G05D 2107/70; G05D 2109/14

(54) **A CONTROLLER FOR AN AUTOMATED STORAGE AND RETRIEVAL SYSTEM**

STEUERUNG FÜR EIN AUTOMATISIERTES REGALBEDIENUNGSSYSTEM

CONTRÔLEUR POUR SYSTÈME DE STOCKAGE ET DE RÉCUPÉRATION AUTOMATISÉ

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**17.12.2025 Bulletin 2025/51**

(73) Proprietor: **AutoStore Technology AS**
**5578 Nedre Vats (NO)**

(72) Inventor: **Djupesland, Elias**
**5578 Nedre Vats (NO)**

(74) Representative: **Kilburn & Strode LLP**
**Lacon London**
**84 Theobalds Road**
**Holborn**
**London WC1X 8NL (GB)**

(56) References cited:
**GB-A- 2 559 631    GB-A- 2 569 009**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The disclosure relates to a controller for an automated storage and retrieval system. More particularly, it relates to a controller for controlling a robot in an automated storage and retrieval system and a method of learning a control policy for the controller.

**BACKGROUND**

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Examples of such systems involving automated path planning are disclosed in GB2569009 and GB 255963. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container-handling vehicles are capable of travelling at high speeds in X and Y directions along the rails, and a control system needs to be provided to control the vehicles and optimise route planning. The vehicles can be seen as individual agents for which actions are determined by a control policy as a function of the agent's state.

Methods of learning multi-agent control policies that determine how agents, such as container-handling vehicles in an automated storage and retrieval system, are to act depending on their state are known. Some methods use reinforcement learning to learn control policies that determine actions to be taken as a function of observations about the state. Typically, such systems operate in discrete time steps and have a simple model of an agent's state and possible control actions. An example of such a method can be found in Mehul Damani, Zhiyao Luo, Emerson Wenzel, and Guillaume Sartoretti; PRIMAL 2: Pathfinding via reinforcement and imitation multi-agent learning - life-long; IEEE Robotics and Automation Letters, 6(2):2666-2673, apr 2021; doi: 0.1109/lra.2021.3062803; URL: https://arxiv.org/abs/2010.08184, which is and referred to below as PRIMAL2.

One or more aspects of an invention are set out in the claims.

**BRIEF DESCRIPTION OF THE DRAWINGS**

The disclosure will now be described in more detail in connection with a number of example embodiments shown in the accompanying drawings, in which:

Fig. 1 shows a perspective view of a storage system comprising a grid and a plurality of robotic container-handling vehicles configured to retrieve and/or rearrange goods stored within the grid;

Fig. 2 shows a top view of the system of Fig. 1;

Fig. 3A shows a side view of a first robotic container-handling vehicle suitable for use in the system of Fig. 1;

Fig. 3B shows a side view of a second robotic container-handling vehicle suitable for use in the system of Fig. 1;

Fig. 3C is a perspective side view of the robot of Fig. 3B;

Fig. 4 shows a computing device for implementing the operations described herein;

Fig. 5 shows a control and reinforcement learning system overview illustrating robotic container-handling vehicles interacting with a storage system environment under control of a control policy adapted using reinforcement learning;

Fig. 6 shows an observation for the control policy and reinforcement learning derived from a state of the storage system environment comprising three robotic container-handling vehicles (circles), their goals (triangles) and an obstacle (crosshatch);

Fig. 7 shows an artificial neural network architecture implementing the control policy;

Fig. 8 shows a flow chart of a reinforcement learning method for adapting the control policy; and

Fig 9 shows a flow chart of a control method using the control policy.

DETAILED DESCRIPTION

In overview, the disclosure relates to a controller for controlling a robot in an automated storage and retrieval system and specifically to constraints on the control actions the controller can instruct robots to take. The constraints are configured to reflect the physical constraints on the movement of the robots, for example that is they have significant momentum when moving about the grid and therefore need slow down, possibly to a stop or near stop in order to change directions. The constraints are designed to mimic the physical constraints in a discrete-time control system. This enables discrete-time control approaches, including at least most current reinforcement learning methods to be used with the automated storage and retrieval system.

In some more detail, the robot is configured to travel along x and y dimensions of a grid of storage columns and to lift storage containers from or lower containers into the columns. Storage containers may also be referred to as bins. The controller is configured to receive an observation at a current time step, comprising information about an environment of the controlled robot. The observation may be limited to a region of the environment around a current column location of the robot, the region being smaller than the whole environment, or may include the whole environment. The observation further comprises a goal column for the robot to travel to and may include information about other robots in the region or whole environment, as the case may be.

The observation is input to a control policy that generates an action for the controlled robot in response to the observation and the generated action is output to the robot to control the robot to perform the action, or a physical world equivalent of the action. The action is one of: staying at the current column or moving to an adjacent column, subject to the constraint that if the robot has moved to the current column from a different column at the preceding time step (that is the time step t-1 immediately prior to the current time step t), the adjacent column is in a direction in which the robot has moved to the current column. In other words, if the robot is moving, it is constrained to keep moving in the same direction or stop, so that the robot has to stop for one time step before it can change direction, reflecting the finite time it take a real physical robot to decelerate, change direction and accelerate again.

In some cases, a further constraint is placed on the generated action, constraining the robot to remain at the goal column for two or more time steps to provide time for a storage container to be placed at or retrieved from a goal location withing the goal column. For example, the goal location can be depth (or height, more generally z position) in the goal column. In some cases, the number of time steps to remain at the goal column is based on the position of the goal location within the goal column. For example, if the robot moves above the columns, the location can be depth and the number of time steps may increase with depth. More generally, the controller may be configured so that the number of time steps to remain at the goal location increases with the distance the storage container needs to be move in the column to place it at or retrieve it from the goal location. The location / depths / distance may be determined by other storage containers stored in the column, for example the goal location for a storage container to be deposited in a column may be determined by the height of the storage containers already in the column, on top of which the storage container to be deposited will be placed.

The constraints may be implemented as soft or hard constraints, as explained below.

In cases where the observation includes information about additional robots in the environment, for example in a region to which the observation is limited, the observation may include information about the column locations and/or goal columns of one or more additional robots. The observation may include an indication of a direction of travel for the one or more additional robots. The indication may be, for example, a respective position at the next time step determined based on the respective positions at the current and previous time steps for the one or more additional robots or, equivalently, based on the action from the previous time step being taken again, or any other indication, such as an indication of velocity (direction and speed) of the one or more additional robots. Providing an indication of a direction of travel provides a computationally cheap and efficient way to provide a measure of prediction as to where each additional robot is likely to be at the next time steps, in particular if robots in the controlled system are more likely to be moving rather than stationary in order to reach their respective goals and keep being utilised for storage container handling.

The disclosure further relates to an automated storage and retrieval system comprising multiple robots and a controller for each robot, and to a method of learning the control policy using reinforcement learning.

**EP 4 664 228 B1**

*Automated storage and retrieval system overview*

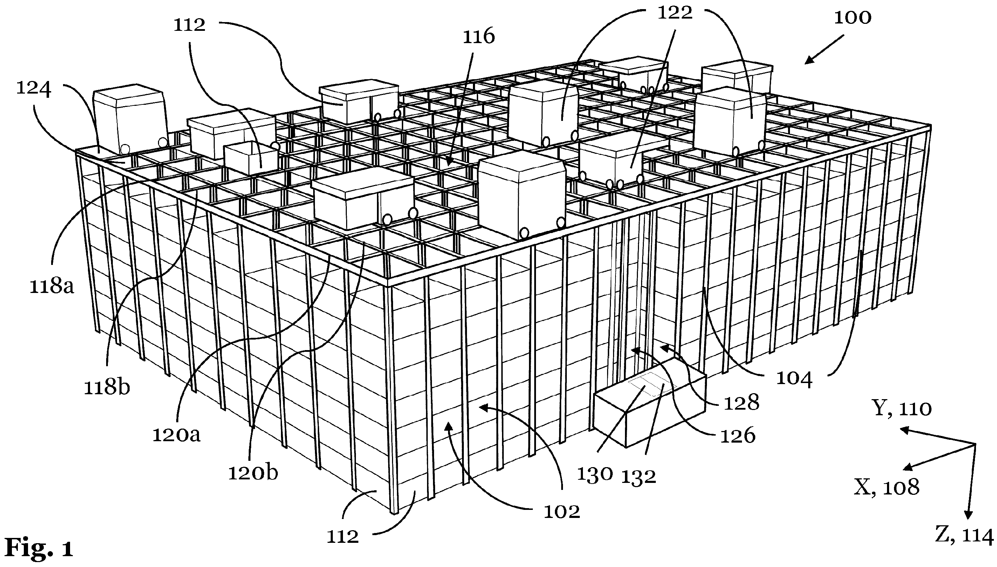

Referring to Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

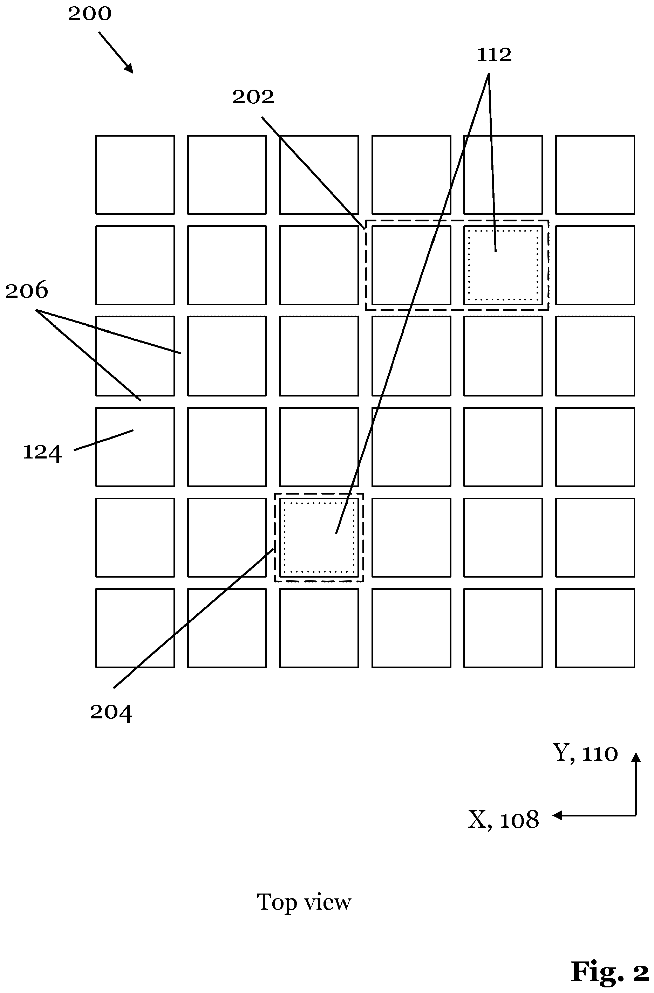

Referring to Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

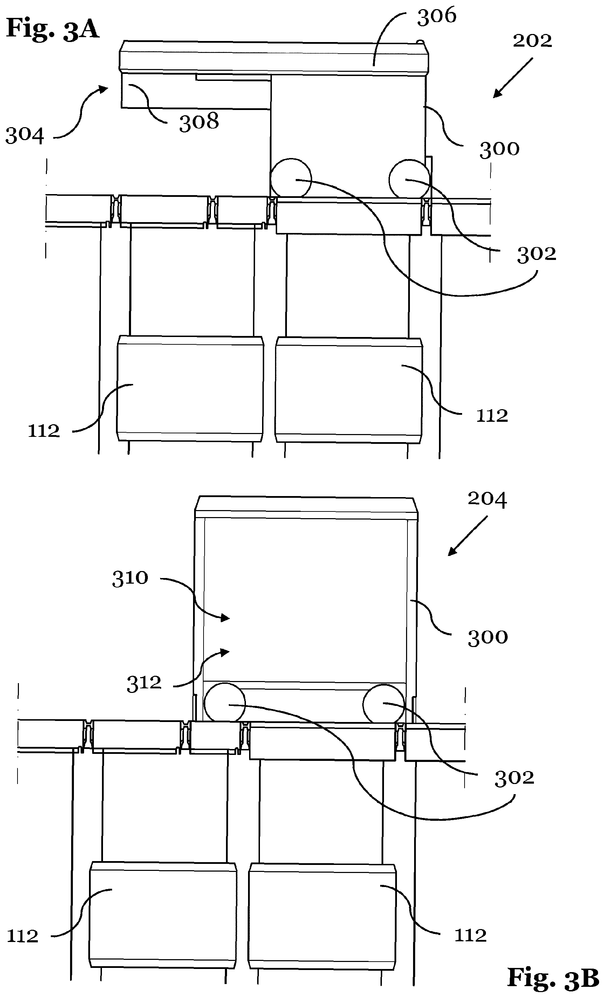

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

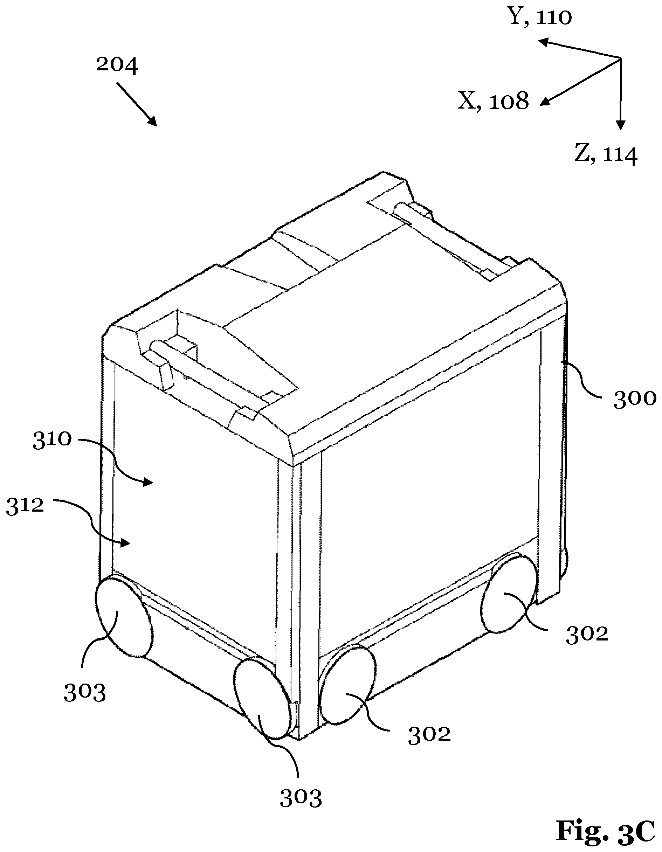

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303, respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

4

*Control and monitoring system*

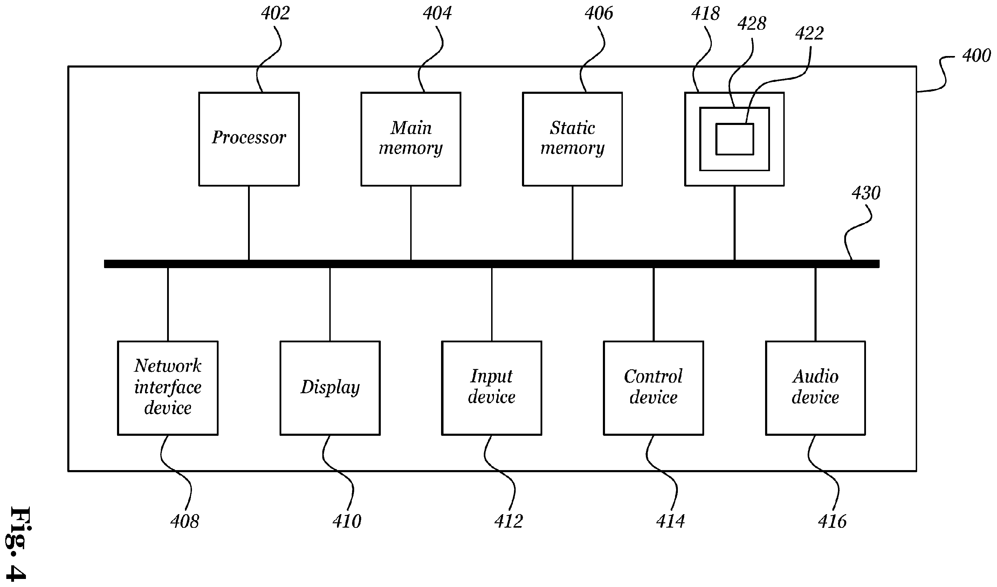

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

*Operation of the automated storage and retrieval system*

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned, if necessary, as discussed above.

*Control and reinforcement learning system overview*

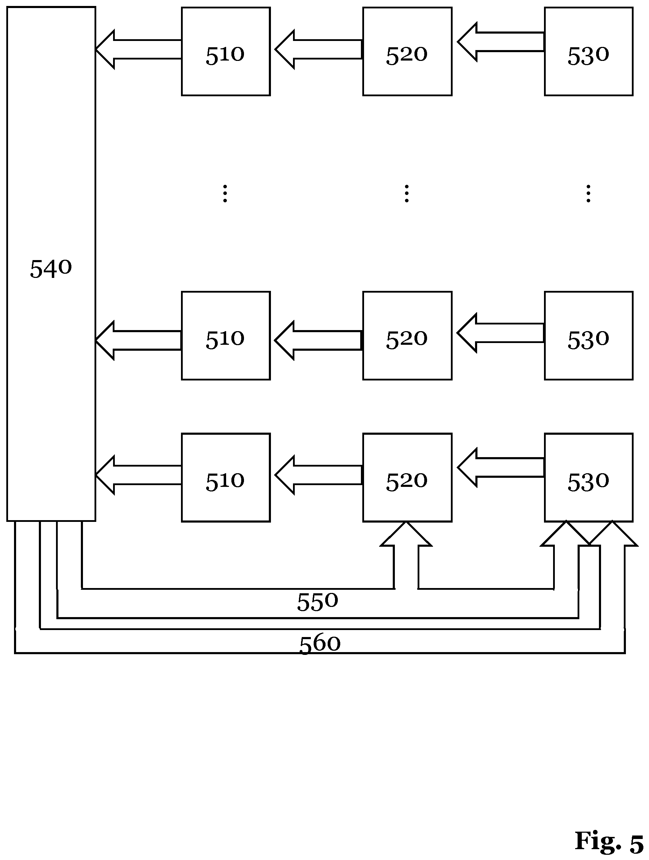

With reference to Fig. 5, the processing system 400 implements for each robotic container-handling vehicle 202, 204, referred as agent 510 for ease of description, a control policy 520 to control each agent to reach a goal set for the agent, for example to retrieve a container from a column. Each control policy 520 is adjusted based on a corresponding reinforcement learner 530 that generates gradients used to update parameters of the control policy 520. Each agent 510 receives a control signal at a current time step from the respective control policy 520 determining an action to take for the agent 510 as it interacts with the storage and retrieval grid 100, 200, referred to as environment 540 for ease of description.

The environment 540 comprises multiple agents 510 and corresponding control policies 520 and reinforcement learners 530, which may be implemented synchronously or asynchronously by the processing system 400, for example in separate threads, using dedicated processors for each control policy and/or reinforcement learner, or in any suitable combination of these or any other alternative approaches. In some implementations, the processing system may be configured in a control mode to control the agents 510 in the real environment 540, and/or in a separate simulation mode to simulate the agents 510 and environment 540 for the purpose of learning or refining the control policies. Learning may additionally or alternatively occur when the real system is actually controlled.

Each action by an agent 510 in the environment 540 causes the environment 540 to transition to a new state for the next time step and generates an observation 550 for the next time step that is fed back to the corresponding control policy 520 and reinforcement learner 530. In addition, the environment 540 generates a reward 560 for the next state that is fed back to the reinforcement learner 530. The observation may include the entire state of the environment, including any other agents present in the environment or may include only information about a region around the agent 510 that is smaller than the environment 540.

The control policy 520 generates an action for the agent 510 for the next time step based on the observation from the current time step. The reinforcement learner 530 adjusts the control policy 520 using the observation 550 and reward 560 using any suitable reinforcement learning technique to minimise an objective function that typically includes a measure of total discounted rewards received over a learning period and may include other terms that encourage desirable behaviour of the agents. Each agent and the corresponding policy may be trained independently or together, either synchronously or asynchronously. The rewards will typically be positive for desirable events, e.g., reaching a goal state, and negative for undesirable events, e.g., a small negative reward for landing on a non-goal state and/or a large negative reward for colliding with another agent.

*Action constraints and goal definition*

To account for the physical structure of the agents 510, the goal is defined as a column at which the agent is to retrieve or deposit a storage container. For agents 510 configured as the first type of robotic container handling vehicle 202, the agent 510 is considered to have met the goal when the gripping device 308 is located at the goal column. For agents 510 configured as the second type of robotic container handling vehicle 204, the agent 510 is considered to have met the goal when the agent 510 is located at the goal column.
To further account for the physical constraints under which the agents 510 operate, and in particular the need to decelerate or even stop before changing direction, to provide time for the appropriate set of wheels to engage the track for the new direction, the following constraints are applied:

- at each time step the agent 510 can stop or move to an adjacent column in one of the four x, y directions;

- if the agent is moving at a given time step, it is constrained to stop or continue moving to the adjacent column in the same direction it is moving in;

- if the agent arrives at a goal column, it has to remain there for at least two time steps to allow time for the depositing or retrieval of the storage container.

In some implementation, the depth within the column at which a storage container to be retrieved is located, or the depth at which the last storage container in the goal column on which the storage container is to be deposited, is used to determine the number of time steps to remain at the goal column. Specifically, the number of timesteps in these cases increases with the depth, for example is proportional to the depth.
Other constraints may be applied, for example preventing the agent 510 from moving outside of the environment 540, for example moving beyond the limit of the storage and retrieval grid, or from moving to columns occupied by another agent.
The above constraints may be implemented in many different ways. For example, the actions that can be picked by the policy can be restricted to the set of valid actions consistent with the above constraints. The control policy outputs a score, likelihood or probability for each action at each time step and picks an action in accordance, for example picking the action with the highest score, likelihood or probability or sampling an action in accordance with the probability. In the former case, for example, set of actions to pick from can be limited to valid actions and in the latter case, the action can be resampled if an invalid action is sampled, or the set of actions can be limited to valid actions and the probabilities re-normalised for sampling if needed.
Other options for implementing the constraints include a combination of one or more of: applying a negative reward for picking an invalid action, defaulting to staying in the current column if an invalid action is picked, and applying a supervised learning signal that reduces the likelihood of the policy proposing invalid actions, for example as an additional loss term for the policy learning. These soft constraints can be used in addition to or instead of the hard constraints on action selection and are distinguished from the above hard constraints in that that they make constraint violations less likely but not impossible.

*State observations*

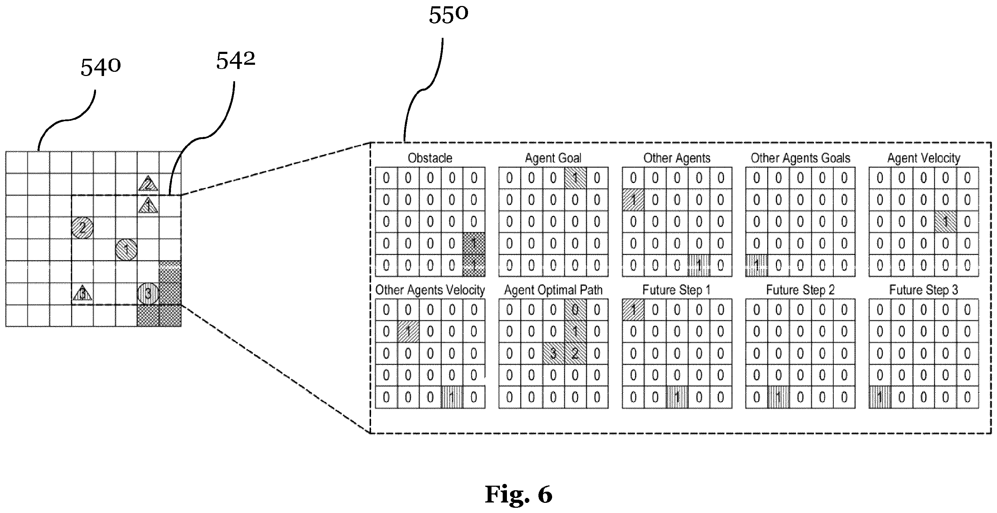

As an agent 510 interacts with the environment 540 under control of the control policy 520, observations 550 are generated reflecting the state of the environment 540 at each time step. These observations can be based on a simulated system during training and on sensor measurements and feedback, such as computer vision image recognition from a camera system, contact sensors in tracks or robotic vehicles, electromagnetic and optical position sensing, satellite positioning systems and the like. Sensor fusion between multiple such feedback source, and in some cases, predicted observations from a concurrent simulation can also be used to generate observations during actual control.
Referring to Figure 6, in some implementations, the observations 550 for each agent 510 are generated for an observed region 542 around the current agent position, for example centred on the current agent position. The observed region 542 is a subset of the environment 540, that is it has a subset of the columns that are present in the environment, for example the observed region maybe a subset of 2 columns in each cardinal direction from the current column of the agent 510, resulting in a 5x5 column region, as illustrated in Figure 6. Any other suitable region, for example a region of 5 columns in each cardinal direction around the current column, resulting in an 11x11 column region as assumed in the neural network implementation discussed below, may be used. In some implementations, the entire environment 540 may be the observation region, independent of the current column the agent 510 is located at.

One or more numeric, typically binary, maps are generated to capture information about the state of the environment 540 in the observed region 542, the maps correspond to a matrix having binary entries with indices corresponding to map locations. A specific implementation of the observation 550 has the following 9 binary maps and one integer map, which can be considered as a 11x11x10 observation tensor stacking the corresponding typically binary matrices:

- Obstacle locations, having a non-zero entry where an obstacle rather than a column is present in the map, for example a map location outside the storage and retrieval grid;
- Agent goal locations, having a non-zero entry at the location of the agent's current goal if present in the observation region;
- Other agent locations, having a non-zero entry at location(s) of other agent(s) in the observation region;
- Other agent goal locations, having a non-zero entry at the location of other agent(s)' current goal(s) if present in the observation region;
- Agent velocity, represented by a non-zero entry at the location corresponding to the agent location at the previous time step mirrored about the current time step, that is the location the agent would reach if the agent repeats the action from the previous time step, for example the current location if the previous action was to remain at the location and the next column in the direction from the previous to the current column if the last action was to move in one of the directions;
- Other agent velocity, represented by a non-zero entry for the other agents as set out above for the agent;
- Optimal path representation for the agent to reach its goal, represented by the corresponding number of time steps it would take to reach the goal from each location on the optimal path at that location, for example "3" for a location on the optimal path that is three time steps away from the goal column location, the optimal path being determined by any suitable path planning algorithm, in some cases ignoring the presence of other agents, for example using the A* algorithm in Peter E. Hart, Nils J. Nilsson, and Bertram Raphael. A formal basis for the heuristic determination of minimum cost paths. IEEE Transactions on Systems Science and Cybernetics, 4(2):100-107, 1968. URL: https://doi.org/10.1109/TSSC.1968.300136;
- Optimal path representation for the other agents, represented N binary maps for N future time steps if the other agents following their optimal path, for example determined as described above for the agent, with a non-zero entry for the other agent(s) location(s) at the corresponding future time step, for example three binary maps for N=3 future time steps, the first with the optimal path agent location(s) at the next time step, the second with the optimal path agent location(s) at the subsequent time step and the third with the optimal path agent location(s) at the time step after that.

In some implementations, the agent velocity map is used to implement action constraints (see *Action constraints and goal definition* above). Specifically, the agent may be constrained to either remain at the current column location or move to a column with a non-zero entry in the agent velocity map.

While the resulting tensor in the example of Fig. 6 is 11x11x10, in the more general case of N future time step optimal path locations for the other agents, the observation tensor will be of dimensions 11x11x(N+7). It will, of course, be appreciated that other the observed region can be differently sized and/or defined and that the number of different components of the observations can be different, adding additional components or omitting one or more of the ones described above.

In addition to the observation tensors described above, each observation may comprise an indication of the goal location that is informative of the goal location whether it is within the observed region 542 or not, in particular if the observed region 542 is smaller than the environment 540. For example, this information may be present in terms of two scalar values, the first indicating a direction to the goal location, for example in terms of an angle or one of the components of a unit vector pointing to the goal location and a distance from the goal location or, in another example, the two components of a vector joining the current agent location to the goal location.

*Policy neural network implementation*

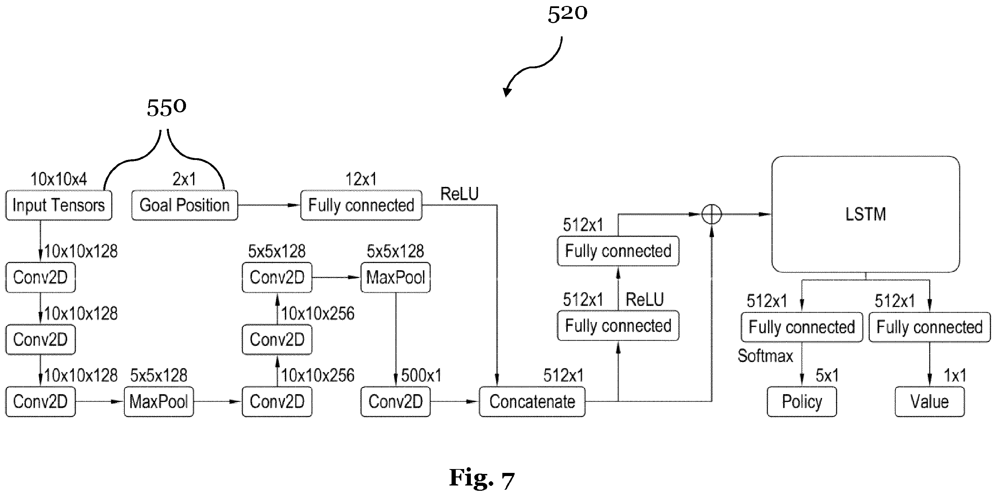

In some implementations, the control policy is implemented by a neural network, although other ways to implement control policies are known in the art of reinforcement learning and can be used in other implementations. The neural network may be a deep neural network, i.e., is one with multiple network layers arranged in sequence. For example, the network may have one or more convolutional layers followed by a recurrent layer downstream of the one or more convolutional layers. A specific neural network implementation for the control policy 520 is illustrated in Fig. 7. The network receives the observation tensor and goal scalars (collectively goal vector) as input and processes through a plurality of network layers to output a control policy output representing a probability of action selection for each action as a function of the input observation. The action may be selected from these probabilities by sampling or by selecting the most likely one. The network also outputs a scalar representing the value, the expected total discounted reward, as a function of the input observation. The specific network structure is described in detail in the following table.

| Layer | Description | Shape | Comment |
|---|---|---|---|
| 1 | Input | (11, 11, 10) | Observation tensor |
| 2 | VGG1: Conv | (11, 11, 128) | k=3, s=1 |
| 3 | VGG1: Conv | (11, 11, 128) | k=3, s=1 |
| 4 | VGG1: Conv | (11, 11, 128) | k=3, s=1 |
| 5 | VGG1: MaxPool | (5, 5, 128) | |
| 6 | VGG2: Conv | (5, 5, 256) | k=3, s=1 |
| 7 | VGG2: Conv | (5, 5, 256) | k=3, s=1 |
| 8 | VGG2: Conv | (5, 5, 256) | k=3, s=1 |
| 9.1 | VGG2: MaxPool | (2, 2, 256) | |
| 9.2 | Input | (2,1) | Goal position vector |
| 10.1 | Conv | (1, 1, 500) | k=2, s=1; input is 9.1 |
| 10.2 | FC / ReLU | (12, 1) | Input is 9.2 |
| 11 | FC /ReLU | (512, 1) | Input is 10.1|10.2 |
| 12 | FC / ReLU | (512, 1) | |
| 13 | LSTM | 512 | residual skip connection (10.1|10.2) |
| 14.1 | FC | (512, 1) | Policy |
| 14.2 | FC | (512, 1) | Value |
| 15.1a | Softmax | (5,1) | Policy |
| 15.1b | Sigmoid | (5, 1) | Independent action likelihood |
| 15.2 | Output | (1, 1) | Value |

Layer 1 takes the 11x11x10 input tensor as input, followed in layers 2 to 9.1 by two blocks of three Visual Geometry Group (VGG) inspired blocks comprising three convolutional layers with kernels size k=3 and stride s=1, followed by a respective max pooling layer. This is followed by a k=2, s=1 convolutional layer 10.1. The goal position input vector is present in a second input layer 9.2 feeding into a fully connected layer 10.2 with ReLU activation. Layers 10.1 and 10.2 are concatenated and provided as input to a group of two fully connected layers 11, 12 with ReLU activation, which feeds into a Long-Short-Term-Memory LSTM layer 13, which also receives the concatenation of 10.1 and 10.2 by means of a residual skip connection. The policy output $\pi$ by a softmax layer 15.1a connected to the LSTM layer 13 via a fully connected layer 14.1. An additional (non-normalised) action likelihood output $\tilde{\pi}$ used in training, as described below, is provided by a sigmoid layer 15.1b connected to layer 14.1. A scalar value output V is provided by a linear output layer 15.2 connected to a fully connected layer 14.2 that connects to the LSTM layer 13.

*Reinforcement learning*

To implement reinforcement learning, the system defines rewards 560 that encourage positive behaviours and outcomes (positive) reward and discourage negative ones (negative reward). In some specific implementations, the environment 540 provides the following rewards 560 to the reinforcement learner 530 at each time step:

- Reaching the goal: r=+5
- Timestep not on goal: r=-0.3
- Collision with another agent: r=-2

Multiple reinforcement learning frame works are known to the skilled person. In some implementations, an actor-critic framework is used. Specifically, in some implementation, the advantage-actor-critic framework is used and more specifically the asynchronous-advantage-actor-critic framework (A3C) is used to handle multiple agent 510, as described below.

In accordance with the A3C framework, the network is trained to minimise a value loss by backpropagating the corresponding gradient from the value output (layer 15.2 in the network implementation discussed above) to the inputs of the network. The value loss can be defined as follows:

$$L_{\text{value}} = \frac{1}{T} \sum_{t=1}^{T} \left( V(o_t) - R_r(o_t) \right)^2$$

where

$$R_r(o_t) = \sum_{i=0}^{k} \gamma^i r_{t+i}$$

and $o_t$ is the observation at time step t, $r_t$ is the reward at timestep t, y is a discount factor suitably chosen, for example $\gamma = 0.95$, $T$ is the length of a training episode, for example 256 time steps, and k is a suitable reward horizon, for example the number of time steps from the current time step to the end of the episode, bounded by T.

The network is further trained to optimise total reward by minimising a policy or actor loss by back-propagating the corresponding gradient from the policy output (network layer 15.1a in the network implementation discussed above) to the input, The policy output can be seen as representing $\pi_t(a_t) = P(a_t | \pi, o_t; \theta)$, the probability of selecting action $a_t$ at time step t given observation $o_t$ and the policy as defined by the parameters $\theta$ of the network. The actor loss can be defined as follows:

$$L_{\text{actor}} = \frac{1}{T} \sum_{t=1}^{T} -\sigma_H \cdot H\big(\pi_t(\cdot)\big) - \log\big(\pi_t(a_t) A(o_t, a_t; \theta)\big)$$

where the advantage $A(o_t, a_t; \theta)$ is defined as

$$A(o_t, a_t; \theta) = r_t + \gamma V(o_{t+1}; \theta) - V(o_t; \theta)$$

and $-\sigma_H \cdot H(\pi_t(\cdot))$ is the entropy over the actions as a regularisation term that encourages exploration, multiplied by a weight factor that determines the relative weight as compared to reward maximisation via the advantage. Both the entropy and reward terms have negative signs as the loss is to be minimised while both entropy and advantage should increase with training.

In addition to the value and actor losses of the A3C framework, in some implementations, an additional loss function is minimised, providing a supervised training signal to reduce the likelihood of invalid actions in response to a given observation. A corresponding loss function can be defined as follows:

$$L_{\text{valid}} = \frac{1}{T} \sum_{t=1}^{T} - \sum_{i=1}^{5} \log\big(\tilde{\pi}_t(a_i)\big) \cdot v_i(t) + \log\big(1 - \tilde{\pi}(a_i)\big) \cdot \big(1 - v_i(t)\big)$$

where $\tilde{\pi}_t(a_i)$ is a (non-normalised) likelihood for action $a_i$ under the policy at time step t, as represented by layer 15.1b in the above network implementation and $v_i(t)$ is the ground truth as to whether action $a_i$ is valid ($v_i(t) = 1$) or not ($v_i(t) = 0$) at time step t, with valid actions not being invalid actions, including leaving the environment 540 or colliding with another agent 510. The loss function is a negative cross-entropy reduced by increasing the likelihood of valid actions and reducing the likelihood of invalid actions during training.

An overall loss function is formed by combining terms for the above three loss functions using suitable weighting factors $\alpha$, $\beta$ and $\zeta$:

$$L_{\text{final}} = \alpha \cdot L_{\text{value}} + \beta \cdot L_{\text{actor}} + \zeta \cdot L_{\text{valid}}$$

where $\alpha$, $\beta$ and $\zeta$ are set using experience, the desired behaviour or any suitable hyper-parameter search paradigm and

$\zeta$ may be set to zero for A3C learning only. The loss function may be minimised using any suitable optimisation approach, such as gradient descent, batch or mini-batch gradient descent or stochastic gradient descent. In some implementations, the loss function is minimised using the ADAM optimiser (arXiv:1412.6980; https://doi.org/10.48550/arXiv.1412.6980). In some implementations, a learning rate of the optimiser is set to decay over time, for example in inverse proportion to the square root of the overall training time, such as measured by the count of training episodes.

*Multi-robot learning*

As referenced above, in some implementations, the control policies 520 for the agents 510 are learned using the A3C framework (see arXiv:1602.01783 [cs.LG] https://arxiv.org/abs/1602.01783). This framework enables each agent 510 to operates with a stable actor-critic network during each episode to accumulate gradients and updates the policy for all robots at the end of the episode, with the gradients accumulated during the episode.

Specifically, all agents 510 share common updates to the network parameters $\theta$ while the agents 510 operate in the same environment. At the beginning of the episode, each respective reinforcement learner 530 gets a local copy of the parameters $\theta$ of the control policy 520 and uses it to generate actions and gradient updates. The gradient updates are accumulated during the episode and when the episode ends, the accumulated gradients are used to update the global parameters and a new episode starts, making local copies of the global parameters. In addition to these global end-of-episode parameter updates, in some implementations, each reinforcement learner 530 updates the local copy of the parameters $\theta$ of its policy 520 when its agent 510 reaches a goal during an episode, in addition to the global parameter update at the end of an episode.

*Reinforcement learning and control methods*

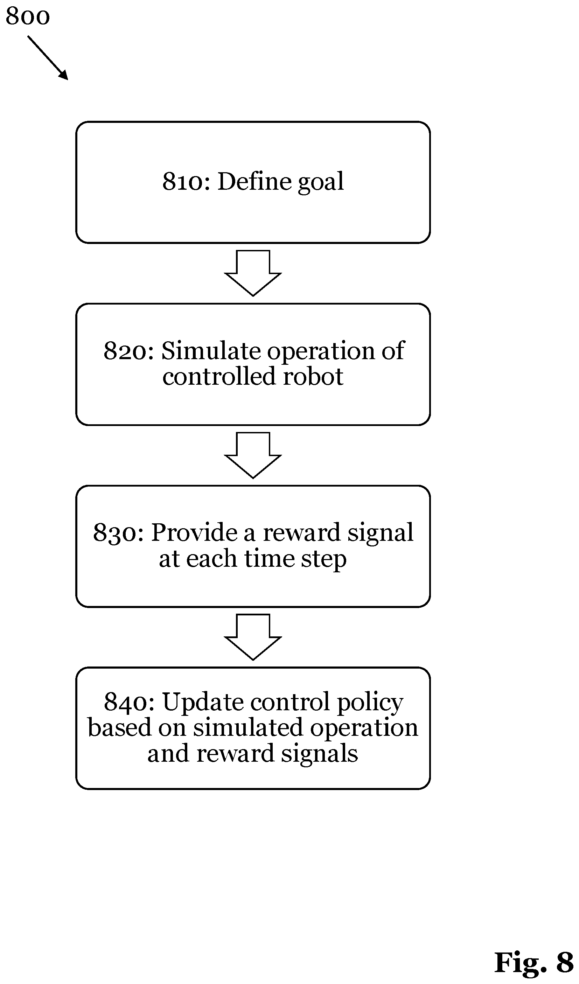

Referring Fig. 8, in summary, some implementations of a reinforcement learning method 800 for learning the parameters of a control policy 520 comprises defining 810 a goal. For example, the goal can be defined for each agent 510 by randomly selecting a grid column as the goal column for that agent, or the goal columns (and in some implementations the z locations of storage containers) can be obtained from historic operational data from a database of the processing system 400. The method then comprises simulating 820 operation of the agent 510, for example a robotic container-handling vehicle as described above, under control of the control policy 520, providing 830 a reward 560 at each time step and updating 840 the control policy based on the simulated operation and reward 560, for example as described above for one of the agents. In some implementations, parameter updates are coordinated between agents using the A3C framework. In addition to updating the parameters using simulation as described above, the parameters may additionally be updated during real operation of the system if suitable observations and rewards 560 are available.

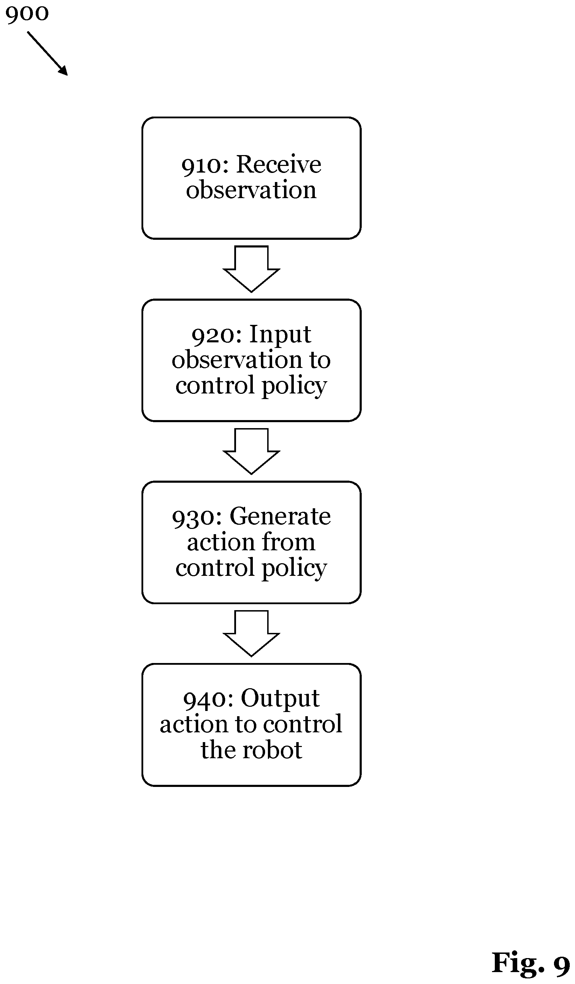

Referring to Fig. 9, some implementations of a method 900 of using the learnt control policy 520 to control the agent 510 comprises receiving 910 an observation 550, including information about the agent's goal, from the environment 540 for an agent 510, inputting 920 the observation to the control policy 520 for the agent 510, generating 930 an action from the control policy 520, for example as described above, and outputting 940 the action, suitably constrained as described above, to the agent 510. Gaol information may be provided by a warehouse management system implemented by the processing system 400 in line with received retrieval and storage requests. In response the agent 510 interacts with the environment 540 in accordance with the action, in the above example, for example carrying on moving in the same directions or stopping, which generates an observation 550 from the environment, and so forth. In some implementations, the generated action is output to the agent 510 as soon as it is generated and the agent 510 is a real-world agent that interacts with a real environment 540, so that control is online and in real time. In some other implementations, a simulated agent 510 and environment 540 are used to collect a sequence of actions for off-line path planning, for example to define a trajectory for the agent 510 to reach a goal column prior to the agent actually being controlled to implement the trajectory in a feedforward manner.

*Penultimate comments*

It is to be understood that the above description is intended to be illustrative, and not restrictive. Many other implementations will be apparent to those of skill in the art upon reading and understanding the above description.

In particular, it will be apricated that the focus of the present disclosure is on providing action constraints that enable discrete time control approaches to be used with the storage and retrieval systems of the disclosed type. The invention is therefore not limited to specific reinforcement learning method or indeed the use reinforcement learning at all. The teachings related to the constraints reflecting the physical reality of the storage and retrieval system are applicable to any control system, and in particular to any discrete time control systems. It follows that the invention is also not limited to specific implementations of neural networks, or indeed the use of neural networks to implement the control policy, nor to any particular way of representing observations.

While the disclosure provides particular examples in the context of which the described movement constraints are deployed, it will be appreciated that the exact nature of the control method, the controller or control policy or any method of adapting or learning the controller or control policy is not germane the skilled person's ability to implement the disclosed movement constraints in the context of a controlled, in particular a discrete-time controlled, automated storage and retrieval system.

Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

**Claims**

1. A controller for controlling a controlled robot (122, 510) in an automated storage and retrieval system, **characterised by** the automated storage and retrieval system comprising a storage grid (100) of columns (102) arranged along x and y dimensions of the storage grid (100) and arranged to store storage containers (112) in each column along a z dimension of the storage grid (100) and the controlled robot (122, 510) being configured to travel along the x and y dimensions and to lift storage containers (112) from or lower containers (112) into the columns (102), and by the controller comprising a processor configured to repeatedly:

   receive an observation (550) at a current time step, wherein the observation (550) comprises information about an environment (540) of the controlled robot (122, 510) and about a goal column of the controlled robot (122, 510) to which the controlled robot (122, 510) is to travel;
   input the observation (550) to a control policy (520) to generate an action for the controlled robot (122, 510), wherein the action is one of staying at a current column at which the controlled robot (122, 510) is located or moving to an adjacent column along the x or y dimension, and, if the controlled robot (122, 510) has moved to the current column from a different column at the time step preceding the current time step, the adjacent column is constrained to be in a direction the controlled robot has moved from the different column to the current column; and
   output the action to the controlled robot to control the controlled robot.

2. The controller of claim 1 wherein, the controlled robot (122, 510) is constrained to remain at the goal column for two or more time steps to provide time for a storage container placing or retrieval operation to place a storage container at or retrieve a storage container from a goal location for the storage container.

3. The controller of claim 2, wherein the number of time steps to remain at the goal column is determined based on a position of the goal location within the goal column.

4. The controller of claim 1, 2 or 3, wherein the automated storage and retrieval system comprises a plurality of robots (122, 510) and the observation (550) comprises information about the respective column locations and goal columns (102) of one or more additional robots in addition to the controlled robot (122, 510).

5. The controller of claim 4, wherein the observation (550) comprises an indication of a direction of movement of each of the one or more additional robots.

6. The controller of any preceding, wherein the information about the environment (540) of the controlled robot (122, 510) comprises one or more binary maps for a subset (542) of columns (102) of the automated storage and retrieval system, the one or more binary maps being centred on a current location of the controlled robot (122, 510).

7. The controller of any preceding claim, wherein the observation (540) comprises an indication of a unit vector pointing towards, and a distance from the controlled robot (122, 510) to, the goal column.

8. The controller of any preceding claim, the controller being configured to output the action to the controlled robot (122, 510) during the current time step before receiving an observation (550) at the next time step.

9. The controller of any preceding claim, wherein the control policy (520) is implemented using a neural network comprising a convolutional layer downstream of an input layer configured to receive an observation (550) and a recurrent layer downstream of the convolutional layer.

10. An automated storage and retrieval system, **characterised by** the automated storage and retrieval system comprising a storage grid (100) of columns (102) arranged along x and y dimensions of the storage grid (100) and arranged to store storage containers (112) in each column along a z dimension of the storage grid (100) and multiple robots (122) configured to travel along the x and y directions of the storage grid (100) and to lift storage containers (112) from or lower storage containers (112) into the columns (102), the automated storage and retrieval system comprising a controller according to any preceding claim for each robot.

11. A method of learning the control policy (520) for a controller as claimed in any one of claims 1 to 9, the method comprising, repeatedly:

defining (810) a goal column for the controlled robot (122, 510);
simulating (820) operation of the controlled robot (122, 510) controlled by the control policy (520);
at each time step of the simulation, providing (830) a reward (560) for the controlled robot (122, 510), wherein the reward comprises a positive reward at a time step when the goal column is reached and a negative reward for each time step the robot is not at the goal column; and
updating (840) the control policy (520) based on the simulated operation and the rewards using reinforcement learning.

12. The method of claim 11, wherein the reward (560) comprises a negative reward for each time step the action would cause the controlled robot (122, 510) to collide with another robot or with an obstacle.

13. The method of claim 11 or 12, comprising defining a goal column for any additional robots (122, 510) and simulating operation of any additional robots controlled by a respective control policy (520).

14. The method of claim 11, 12 or 13, comprising repeating the simulating (820) and updating (840) for the controlled robot (122, 510) with a new goal column when the controlled robot (122, 510) has reached the goal column.

15. One or more computer-readable media encoding computer code instructions that, when executed on a processor, implement the method of any one of claims 11 to 14.


**Patentansprüche**

1. Steuerung zum Steuern eines gesteuerten Roboters (122, 510) in einem automatisierten Lager- und Entnahmesystem, **dadurch gekennzeichnet, dass** das automatisierte Lager- und Entnahmesystem ein Lagergitter (100) von Säulen (102) umfasst, die entlang einer x- und y-Dimension des Lagergitters (100) angeordnet sind und angeordnet sind, um Lagerbehälter (112) in jeder Säule entlang einer z-Dimension des Lagergitters (100) zu lagern, und dass der gesteuerte Roboter (122, 510) dazu ausgelegt ist, sich entlang der x- und y-Dimension zu bewegen und die Lagerbehälter (112) von den Säulen (102) anzuheben oder die Behälter (112) in diese abzusenken, und dass die Steuerung einen Prozessor umfasst, der ausgelegt ist zum wiederholten:

Empfangen einer Beobachtung (550) zu einem aktuellen Zeitschritt, wobei die Beobachtung (550) Informationen über eine Umgebung (540) des gesteuerten Roboters (122, 510) und über eine Zielsäule des gesteuerten Roboters (122, 510), zu der sich der gesteuerte Roboter (122, 510) bewegen soll, umfasst;
Eingeben der Beobachtung (550) in eine Steuerrichtlinie (520), um eine Aktion für den gesteuerten Roboter (122, 510) zu erzeugen, wobei die Aktion eines von Bleiben an einer aktuellen Säule, an der sich der gesteuerte Roboter (122, 510) befindet, oder Bewegen zu einer benachbarten Säule entlang der x- oder y-Dimension ist, und wenn sich der gesteuerte Roboter (122, 510) zu dem dem aktuellen Zeitschritt vorausgehenden Zeitschritt von einer anderen Säule zur aktuellen Säule bewegt hat, die benachbarte Säule darauf beschränkt ist, sich in einer Richtung zu befinden, in der sich der gesteuerte Roboter von der anderen Säule zur aktuellen Säule bewegt hat; und
Ausgeben der Aktion an den gesteuerten Roboter, um den gesteuerten Roboter zu steuern.

2. Steuerung nach Anspruch 1, wobei der gesteuerte Roboter (122, 510) darauf beschränkt ist, für zwei oder mehrere Zeitschritte an der Zielsäule zu bleiben, um Zeit für einen Lagerbehälterplatzierungs- oder - entnahmevorgang bereitzustellen, um einen Lagerbehälter an einem Zielort für den Lagerbehälter zu platzieren oder einen Lagerbehälter von einem solchen zu entnehmen.

3. Steuerung nach Anspruch 2, wobei die Anzahl von Zeitschritten für das Bleiben an der Zielsäule basierend auf einer Position des Zielorts innerhalb der Zielsäule bestimmt wird.

4. Steuerung nach Anspruch 1, 2 oder 3, wobei das automatisierte Lager- und Entnahmesystem eine Vielzahl von Robotern (122, 510) umfasst und die Beobachtung (550) Informationen über die jeweiligen Säulenorte und Zielsäulen (102) eines zusätzlichen Roboters oder mehrerer zusätzlicher Roboter zusätzlich zu dem gesteuerten Roboter (122, 510) umfasst.

5. Steuerung nach Anspruch 4, wobei die Beobachtung (550) eine Angabe einer Bewegungsrichtung jedes des einen oder der mehreren zusätzlichen Roboter(s) umfasst.

6. Steuerung nach einem des Vorhergehenden, wobei die Informationen über die Umgebung (540) des gesteuerten Roboters (122, 510) eine oder mehrere binäre Karte(n) für eine Teilmenge (542) der Säulen (102) des automatisierten Lager- und Entnahmesystems umfassen, wobei die eine oder die mehreren binäre(n) Karte(n) auf einen aktuellen Ort des gesteuerten Roboters (122, 510) zentriert sind.

7. Steuerung nach einem der vorhergehenden Ansprüche, wobei die Beobachtung (540) eine Angabe eines Einheitsvektors, der auf die Zielsäule zeigt, und einen Abstand von dem gesteuerten Roboter (122, 510) zu dieser umfasst.

8. Steuerung nach einem der vorhergehenden Ansprüche, wobei die Steuerung dazu ausgelegt ist, die Aktion an den gesteuerten Roboter (122, 510) während des aktuellen Zeitschritts auszugeben, bevor sie eine Beobachtung (550) zum nächsten Zeitschritt empfängt.

9. Steuerung nach einem der vorhergehenden Ansprüche, wobei die Steuerrichtlinie (520) unter Verwendung eines neuronalen Netzwerks implementiert ist, das eine Faltungsschicht stromabwärts einer Eingabeschicht, die dazu ausgelegt ist, eine Beobachtung (550) zu empfangen, und eine rekurrente Schicht stromabwärts der Faltungsschicht umfasst.

10. Automatisiertes Lager- und Entnahmesystem, **dadurch gekennzeichnet, dass** das automatisierte Lager- und Entnahmesystem ein Lagergitter (100) von Säulen (102) umfasst, die entlang einer x- und y-Dimension des Lagergitters (100) angeordnet sind und angeordnet sind, um Lagerbehälter (112) in jeder Säule entlang einer z-Dimension des Lagergitters (100) zu lagern, und dass die Vielzahl von Robotern (122) dazu ausgelegt ist, sich entlang der x- und y-Richtung des Lagergitters (100) zu bewegen und die Lagerbehälter (112) von den Säulen (102) anzuheben oder die Lagerbehälter (112) in diese abzusenken, und dass das automatisierte Lager- und Entnahmesystem eine Steuerung nach einem der vorhergehenden Ansprüche für jeden Roboter umfasst.

11. Verfahren zum Erlernen der Steuerrichtlinie (520) für eine Steuerung nach einem der Ansprüche 1 bis 9, das Verfahren umfassend ein wiederholtes:

Definieren (810) einer Zielsäule für den gesteuerten Roboter (122, 510);
Simulieren (820) eines Betriebs des gesteuerten Roboters (122, 510), der durch die Steuerrichtlinie (520) gesteuert wird;
zu jedem Zeitschritt der Simulation, Bereitstellen (830) einer Belohnung (560) für den gesteuerten Roboter (122, 510), wobei die Belohnung eine positive Belohnung zu einem Zeitschritt, zu dem die Zielsäule erreicht wird, und eine negative Belohnung für jeden Zeitschritt, zu dem sich der Roboter nicht in der Zielsäule befindet, umfasst; und
Aktualisieren (840) der Steuerrichtlinie (520) basierend auf dem simulierten Betrieb und den Belohnungen unter Verwendung von bestärkendem Lernen.

12. Verfahren nach Anspruch 11, wobei die Belohnung (560) eine negative Belohnung für jeden Zeitschritt umfasst, zu dem die Aktion bewirken würde, dass der gesteuerte Roboter (122, 510) mit einem anderen Roboter oder mit einem Hindernis kollidiert.

13. Verfahren nach Anspruch 11 oder 12, umfassend ein Definieren einer Zielsäule für beliebige zusätzliche Roboter (122, 510) und Simulieren eines Betriebs beliebiger zusätzlicher Roboter, die durch eine jeweilige Steuerrichtlinie (520) gesteuert werden.

14. Verfahren nach Anspruch 11, 12 oder 13, umfassend ein Wiederholen des Simulierens (820) und Aktualisierens (840) für den gesteuerten Roboter (122, 510) mit einer neuen Zielsäule, wenn der gesteuerte Roboter (122, 510) die Zielsäule erreicht hat.

15. Computerlesbares Medium oder mehrere computerlesbare Medien, die Computercodeanweisungen codieren, die, wenn sie auf einem Prozessor ausgeführt werden, das Verfahren nach einem der Ansprüche 11 bis 14 implementieren.

## Revendications

1. Unité de commande pour commander un robot commandé (122, 510) dans un système automatisé de stockage et de récupération, **caractérisée en ce que** le système automatisé de stockage et de récupération comprend une grille de stockage (100) de colonnes (102) agencées le long de dimensions x et y de la grille de stockage (100) et agencées pour stocker des conteneurs de stockage (112) dans chaque colonne le long d'une dimension z de la grille de stockage (100) et le robot commandé (122, 510) est configuré pour se déplacer le long des dimensions x et y et pour élever des conteneurs de stockage (112) depuis, ou abaisser des conteneurs (112) dans, les colonnes (102), et **en ce que** l'unité de commande comprend un processeur configuré pour, de façon répétée :

   recevoir une observation (550) à un intervalle de temps actuel, dans laquelle l'observation (550) comprend des informations concernant un environnement (540) du robot commandé (122, 510) et concernant une colonne cible du robot commandé (122, 510) jusqu'à laquelle le robot commandé (122, 510) doit se déplacer ;
   entrer l'observation (550) dans une politique de commande (520) pour générer une action pour le robot commandé (122, 510), dans laquelle l'action est une action parmi l'action consistant à rester à une colonne actuelle à laquelle le robot commandé (122, 510) est situé ou l'action consistant à se mouvoir jusqu'à une colonne adjacente le long de la dimension x ou y, et, si le robot commandé (122, 510) s'est mû jusqu'à la colonne actuelle depuis une colonne différente à l'intervalle de temps précédant l'intervalle de temps actuel, la colonne adjacente est obligée d'être dans une direction dans laquelle le robot commandé s'est mû depuis la colonne différente jusqu'à la colonne actuelle ; et
   délivrer l'action au robot commandé pour commander le robot commandé.

2. Unité de commande de la revendication 1, dans laquelle le robot commandé (122, 510) est obligé de rester à la colonne cible pendant deux ou plus de deux intervalles de temps pour fournir le temps pour une opération de positionnement ou de récupération de conteneur de stockage pour positionner un conteneur de stockage à, ou récupérer un conteneur de stockage depuis, un emplacement cible pour le conteneur de stockage.

3. Unité de commande de la revendication 2, dans laquelle le nombre d'intervalles de temps pour rester à la colonne cible est déterminé sur la base d'une position de l'emplacement cible à l'intérieur de la colonne cible.

4. Unité de commande de la revendication 1, 2, ou 3, dans laquelle le système automatisé de stockage et de récupération comprend une pluralité de robots (122, 510) et l'observation (550) comprend des informations concernant les emplacements de colonne respectifs et des colonnes cibles (102) d'un ou de plusieurs robots supplémentaires en plus du robot commandé (122, 510).

5. Unité de commande de la revendication 4, dans laquelle l'observation (550) comprend une indication d'une direction de mouvement de chacun de l'un ou des plusieurs robots supplémentaires.

6. Unité de commande d'une quelconque revendication précédente, dans laquelle les informations concernant l'environnement (540) du robot commandé (122, 510) comprennent une ou plusieurs cartes binaires pour un sous-ensemble (542) de colonnes (102) du système automatisé de stockage et de récupération, l'une ou les plusieurs cartes binaires étant centrées sur un emplacement actuel du robot commandé (122, 510).

7. Unité de commande d'une quelconque revendication précédente, dans laquelle l'observation (540) comprend une indication d'un vecteur unitaire orienté vers, et une distance depuis le robot commandé (122, 510) jusqu'à, la colonne cible.

8. Unité de commande d'une quelconque revendication précédente, l'unité de commande étant configurée pour délivrer l'action au robot commandé (122, 510) durant l'intervalle de temps actuel avant de recevoir une observation (550) à l'intervalle de temps suivant.

9. Unité de commande d'une quelconque revendication précédente, dans laquelle la politique de commande (520) est mise en œuvre en utilisant un réseau neuronal comprenant une couche convolutive en aval d'une couche d'entrée configurée pour recevoir une observation (550) et une couche récurrente en aval de la couche convolutive.

10. Système automatisé de stockage et de récupération, **caractérisé en ce que** le système automatisé de stockage et de récupération comprend une grille de stockage (100) de colonnes (102) agencées le long de dimensions x et y de la grille de stockage (100) et agencées pour stocker des conteneurs de stockage (112) dans chaque colonne le long d'une dimension z de la grille de stockage (100) et de multiples robots (122) configurés pour se déplacer le long des directions x et y de la grille de stockage (100) et pour élever des conteneurs de stockage (112) depuis, ou abaisser des conteneurs de stockage (112) dans, les colonnes (102), le système automatisé de stockage et de récupération comprenant une unité de commande selon une quelconque revendication précédente pour chaque robot.

11. Procédé d'apprentissage de la politique de commande (520) pour une unité de commande telle que revendiquée dans l'une quelconque des revendications 1 à 9, le procédé comprenant, de façon répétée :

la définition (810) d'une colonne cible pour le robot commandé (122, 510) ;
la simulation (820) d'une opération du robot commandé (122, 510) commandé par la politique de commande (520) ;
à chaque intervalle de temps de la simulation, la fourniture (830) d'une récompense (560) pour le robot commandé (122, 510), dans lequel la récompense comprend une récompense positive à un intervalle de temps auquel la colonne cible est atteinte et une récompense négative pour chaque intervalle de temps auquel le robot n'est pas à la colonne cible ; et
la mise à jour (840) de la politique de commande (520) sur la base de l'opération simulée et des récompenses en utilisant un apprentissage par renforcement.

12. Procédé de la revendication 11, dans lequel la récompense (560) comprend une récompense négative pour chaque intervalle de temps auquel l'action amènerait le robot commandé (122, 510) à entrer en collision avec un autre robot ou avec un obstacle.

13. Procédé de la revendication 11 ou 12, comprenant la définition d'une colonne cible pour de quelconques robots supplémentaires (122, 510) et la simulation de l'opération de quelconques robots supplémentaires commandés par une politique de commande respective (520).

14. Procédé de la revendication 11, 12, ou 13, comprenant la répétition de la simulation (820) et de la mise à jour (840) pour le robot commandé (122, 510) avec une nouvelle colonne cible lorsque le robot commandé (122, 510) a atteint la colonne cible.

15. Support ou supports lisible(s) par ordinateur, encodant des instructions de code d'ordinateur qui, lorsqu'elles sont exécutées sur un processeur, mettent en œuvre le procédé de l'une quelconque des revendications 11 à 14.

**Fig. 1**

Top view

Fig. 2

**Fig. 3A**

**Fig. 3B**

**Fig. 3C**

EP 4 664 228 B1

**Fig. 4**

**Fig. 5**

**Fig. 6**

Fig. 7

800

```
┌─────────────────────────────┐
│                             │
│      810: Define goal       │
│                             │
└─────────────────────────────┘
              ⇓
┌─────────────────────────────┐
│                             │
│   820: Simulate operation   │
│     of controlled robot     │
│                             │
└─────────────────────────────┘
              ⇓
┌─────────────────────────────┐
│                             │
│  830: Provide a reward      │
│    signal at each time step │
│                             │
└─────────────────────────────┘
              ⇓
┌─────────────────────────────┐
│                             │
│  840: Update control policy │
│ based on simulated operation│
│    and reward signals       │
│                             │
└─────────────────────────────┘
```

**Fig. 8**

900

910: Receive observation

920: Input observation to control policy

930: Generate action from control policy

940: Output action to control the robot

**Fig. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2569009 A

- GB 255963 A

**Non-patent literature cited in the description**

- **MEHUL DAMANI** ; **ZHIYAO LUO** ; **EMERSON WENZEL** ; **GUILLAUME SARTORETTI**. PRIMAL 2: Pathfinding via reinforcement and imitation multi-agent learning - life-long;. *IEEE Robotics and Automation Letters*, April 2021, vol. 6 (2), 2666-2673, https://arxiv.org/abs/2010.08184

- **PETER E. HART** ; **NILS J. NILSSON** ; **BERTRAM RAPHAEL**. A formal basis for the heuristic determination of minimum cost paths. *IEEE Transactions on Systems Science and Cybernetics*, 1968, vol. 4 (2), 100-107, https://doi.org/10.1109/TSSC.1968.300136